# FASCICULE DE BREVET EUROPEEN

(11) **EP 3 455 107 B1**
(45) Date de publication et mention de la délivrance du brevet: **22.01.2020**
(21) Numéro de dépôt: 17722075.3
(22) Date de dépôt: 12.05.2017
(51) Int. Cl.: B60S 1/38, C08K 3/34, C08L 7/00

(54) **LAME D'ESSUYAGE POUR BALAI D'ESSUIE-GLACE**
WISCHERBLATT FÜR EINEN SCHEIBENWISCHERRAHMEN
WIPER BLADE FOR A WINDSCREEN WIPER FRAME

(30) Priorité: 13.05.2016 FR 1654299
(43) Date de publication de la demande: 20.03.2019
(73) Titulaire: Valeo Systèmes d'Essuyage, 78322 Le Mesnil Saint Denis (FR)
(72) Inventeur: ASSUID, Patrick, 63500 Issoire (FR)
(74) Mandataire: Valeo Systèmes d'Essuyage
(86) Numéro de dépôt international: PCT/EP2017/061534
(87) Numéro de publication internationale: WO 2017/194776

(56) Documents cités:
- EP-A1- 0 446 382
- CN-A- 101 891 905
- JP-A- 2011 020 619
- US-A1- 2013 253 138

## Description

### DOMAINE DE L'INVENTION

La présente invention a pour objet une lame d'essuyage pour un balai d'essuie-glace, notamment une lame d'essuyage en matériau d'origine bio-sourcée.

### ETAT DE LA TECHNIQUE

Les véhicules automobiles sont couramment équipés de systèmes d'essuie-glace pour assurer un lavage et/ou essuyage du pare-brise et éviter que la vision qu'a le conducteur de son environnement ne soit perturbée. Les balaies d'essuie-glaces d'un tel système sont classiquement entraînés par des bras effectuant un mouvement angulaire de va-et-vient. Ces lames frottent contre la surface extérieure de la vitre, par exemple du pare-brise, et évacuent l'eau en l'amenant en dehors du champ de vision du conducteur. Dans une version classique, les balais sont réalisés sous la forme de palonniers articulés qui tiennent la lame d'essuyage en plusieurs points. Dans une version plus récente dénommée "flat blade" (pour "balai plat"), les balais sont réalisés sous la forme d'un ensemble semi-rigide qui maintient la lame d'essuyage sur toute sa longueur.

De manière générale, une lame d'essuyage est réalisée en matériau déformable élastiquement à base d'un élastomère complété d'additifs, notamment pour en améliorer les propriétés mécaniques, l'élasticité, la résistance à l'usure, aux agressions extérieures ou encore faciliter la mise en œuvre du procédé de fabrication. Il peut par exemple s'agir de charges de renfort, de plastifiant, d'agent de vulcanisation, d'agent de protection contre les rayonnement UV, l'oxydation, l'ozone et/ou l'usure.

Aussi bien l'élastomère que les additifs sont dans la plupart des cas des produits issus de la pétrochimie. Néanmoins, la volonté grandissante de préserver l'environnement et de réduire les émissions de CO₂, conduit à limiter l'utilisation de tels produits issus de la pétrochimie.

Dans le domaine de l'industrie du caoutchouc, il est possible d'utiliser le caoutchouc naturel comme élastomère de base qui est très performant du point de vue de son élasticité et de ses propriétés mécaniques intrinsèques. Le caoutchouc naturel est issu de l'hévéaculture, ce qui en fait une matière bio-sourcée.

Cependant, le rapport élastomère/additifs dans le produit final est généralement de l'ordre de 50% - 50% en poids et le taux de produits non-issus de la pétrochimie est au final plutôt faible. Ces additifs demeurent nécessaires pour obtenir un matériau ayant les propriétés suffisantes, notamment en termes de résistance mécanique, de propriétés de glissement et sans générer excessivement de bruit pour être utilisé dans l'industrie automobile pour fabriquer des lames d'essuyage. De plus, les solutions actuelles font couramment emploi de caoutchoucs ayant été fonctionnalisés en amont des opérations de vulcanisation et cuisson du caoutchouc, ce qui complique et rallonge le procédé de fabrication de la lame d'essuyage.

Le brevet JP 2011 020619 A décrit une lame d'essuyage pour balai d'essuie-glace comprenant un matériau à base de caoutchouc naturel, un caoutchouc naturel époxydé, de la silice en tant que charge de renfort bio-sourcée minérale. Ce document se réfère à la préparation d'un matériau caoutchouteux ayant une teneur réduire en produits non-issus de la pétrochimie. En particulier, ce document décrit un composition comprenant en outre du soufre en tant qu'agent de vulcanisation et de l'oxyde de zinc en tant qu'agent bio-sourcé de protection contre le rayonnement UV. Le matériau peut également comprendre un plastifiant.

Le brevet CN 101 891 905 divulgue la préparation d'une lame d'essuyage pour balai d'essuie-glace à base d'un matériau caoutchouteux. L'objectif de ce document est la préparation d'un matériau caoutchouteux ayant une teneur réduire en produits non-issus de la pétrochimie. La composition de caoutchouc composant la lame comprend un caoutchouc naturel et un autre caoutchouc tel qu'un EPDM, SBR ou polybutadiene, un agent de vulcanisation, de l'oxyde de zinc, une charge de renfort et un plastifiant. La charge de renfort est une charge minérale telle que le carbonate de calcium.

Le brevet EP 446 382 A décrit une composition destinée à être utilisée pour la préparation de lame d'essuyage pour un balai d'essuie-glace. Cette composition comprend un caoutchouc EPDM, un élastomère diénique, une charge renforçante et un agent de vulcanisation tel que le soufre. L'élastomère diénique peut être le caoutchouc naturel. La charge renforçante peut être une charge minérale telle que la silice. La composition peut également contenir un plastifiant telle qu'une huile végétale.

Finalement, le brevet US 2013/253138 A se réfère à une composition de caoutchouc destinée à la préparation de lame d'essuyage pour balai d'essuie-glace. La composition de caoutchouc comprend un caoutchouc chloroprène et un caoutchouc naturel en proportion 60/40-95/5. La composition comprend également un agent de vulcanisation, un plastifiant bio-sourcé tel qu'une huile végétale et une charge renforçante bio-sourcée telle que la silice.

Il existe donc un besoin de disposer d'une lame d'essuyage faite en tout ou partie d'un matériau ne rencontrant pas ces inconvénients.

### RESUME DE L'INVENTION

L'invention propose à cet effet une lame d'essuyage pour balai d'essuie-glace, au moins une partie de ladite lame comprenant un matériau à base de caoutchouc naturel et au moins un additif, caractérisée en ce que ledit additif est au moins un plastifiant bio-sourcé et en ce que ladite lame comprend comme seul caoutchouc ledit caoutchouc naturel à l'état vulcanisé, ledit caoutchouc vulcanisé étant obtenu par vulcanisation d'un caoutchouc naturel non-fonctionnalisé.

Au sens de la présente invention, le terme « bio-sourcé » désigne un produit qui n'est pas d'origine fossile et en particulier un produit d'origine végétale, animale ou minérale. On entend par « d'origine fossile », tout produit issu du pétrole ou du charbon ou des dérivés du pétrole ou du charbon, notamment les produits issu de la pétrochimie.

L'utilisation de produits bio-sourcés comme plastifiants permet d'améliorer les propriétés du caoutchouc naturel tout en augmentant la proportion de produits bio-sourcés dans le matériau. Notamment les plastifiants rendent le matériau plus facile à manipuler et facilitent sa mise en œuvre dans un procédé de fabrication industrielle.

Au sens de la présente invention, les termes « non-fonctionnalisé » doivent être compris en ce sens que les chaînes de polymère qui forment ledit caoutchouc naturel n'ont pas été modifiées chimiquement par ajout de fonctions chimiques ou groupements fonctionnels de façon covalente sur lesdites chaînes de polymères.

Le caoutchouc naturel utilisé dans la présente invention peut toutefois faire l'objet, avant les opérations de vulcanisation et de cuisson, d'une ou plusieurs étapes de purification visant à retirer les impuretés organiques (notamment végétales) et minérales du caoutchouc naturel, qui proviennent pour la plupart du suc végétal duquel est obtenu ledit caoutchouc naturel.

Conformément à l'invention, l'utilisation de caoutchouc naturel non-fonctionnalisé comme seul caoutchouc de la lame d'essuyage, en combinaison avec un plastifiant bio-sourcé, permet d'obtenir une lame d'essuyage plus écologique, plus simple à fabriquer, et dont les propriétés mécaniques et physiques sont adaptées à l'essuyage d'une vitre de véhicule automobile.

Ainsi, l'invention permet d'obtenir une lame d'essuyage aux propriétés mécaniques et physiques adéquates, sans qu'il soit nécessaire d'avoir recours à un mélange de caoutchoucs naturel(s) et synthétique(s) pour sa fabrication, ou d'avoir recours - préalablement à la vulcanisation et à la cuisson du caoutchouc - à des traitements de fonctionnalisation du ou des caoutchoucs employés pour former la lame d'essuyage.

Selon différents modes de réalisation de l'invention, qui pourront être mis en œuvre ensemble ou séparément :
- ladite lame comprend un seul grade de caoutchouc naturel, par exemple du caoutchouc TSR 10 ou 20, de préférence le caoutchouc TSR 20,
- le plastifiant est une huile bio-sourcée,
- la différence entre le paramètre de solubilité de ladite huile bio-sourcée et le paramètre de solubilité dudit caoutchouc naturel, mesuré en (cal/cm³)^{1/2} est inférieure ou égale à 2 (cal/cm³)^{1/2}, voire inférieure ou égale à 1,5 (cal/cm³)^{1/2}, voire inférieure ou égale à 1 (cal/cm³)^{1/2}, voire inférieure ou égale à 0,5 (cal/cm³)^{1/2},
- le paramètre de solubilité de ladite huile bio-sourcée est proche du paramètre de solubilité dudit caoutchouc naturel,
- le paramètre de solubilité de ladite huile bio-sourcée est compris entre 7 et 10 (cal/cm³)^{1/2}, de préférence compris entre 8 et 9 (cal/cm³)^{1/2},
- ladite huile bio-sourcée est choisie parmi les huiles et/ou graisses végétales, les huiles et/ou graisses animales, ou un mélange de celles-ci,
- ladite huile bio-sourcée est choisie parmi l'huile de tournesol, l'huile d'olive, l'huile de colza, l'huile de lin, l'huile de noix de coco, l'huile de ricin, l'huile de soja, de préférence un mélange d'huile de tournesol et d'huile de colza,
- ladite lame d'essuyage comprend comme seule huile ladite huile de tournesol,
- ladite huile est choisie parmi les huiles de poisson,
- ledit additif est en outre une charge de renfort bio-sourcée,
- ladite charge de renfort bio-sourcée est choisie parmi une charge minérale, des fibres de bois, la cellulose, des diatomées, ou un mélange de ceux-ci, de préférence un mélange de charge minérale et de fibres de bois,
- ladite charge minérale est un silicate d'aluminium, tel qu'un kaolin,
- plus de 90% en poids dudit matériau est d'origine bio-sourcée, de préférence plus de 95% en poids, voire plus de 96% en poids,
- moins de 10% en poids dudit matériau est d'origine non bio-sourcée, de préférence moins de 5% en poids, voire moins de 4% en poids,
- ladite partie de lame comprenant ledit matériau est un corps de base de ladite lame,
- ledit additif est un agent bio-sourcé de protection contre le rayonnement UV,
- ledit agent de protection est un oxyde de métal choisi parmi le dioxyde de titane, l'oxyde de zinc, ou un mélange de ceux-ci,
- ledit additif est un agent non bio-sourcé anti-oxydant,
- ledit anti-oxydant est choisi parmi les di-phényle amines, les paraphénylènediamines, ou un mélange de ceux-ci,
- ledit additif est un agent non bio-sourcé de vulcanisation,
- ledit agent de vulcanisation est choisi parmi le thiurame, le thiazole, le sulfénamide, ou un mélange de ceux-ci, de préférence un mélange de thiurame, thiazole et sulfénamide.

L'invention concerne encore un balai d'essuie-glace comprenant une lame d'essuyage selon l'invention.

L'invention concerne enfin un système d'essuyage comprenant un balai d'essuie-glace selon l'invention.

### PRESENTATION DES FIGURES

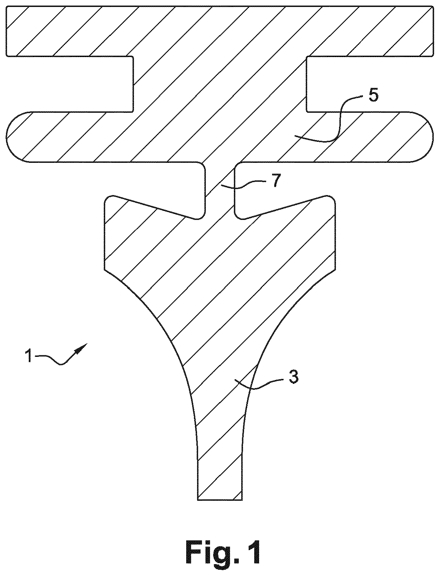

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence à la figure 1 annexée qui est une vue schématique en coupe d'une lame d'essuyage selon un mode de réalisation de l'invention.

### DESCRIPTION DETAILLEE

La lame 1 d'essuyage conforme à l'invention comprend un matériau à base :
- de caoutchouc naturel, et
- d'au moins un additif.

L'additif est par exemple un plastifiant bio-sourcé.

Un plastifiant est un composant permettant de rendre le matériau plus souple et/ou plus facile à mettre en œuvre pour la fabrication d'une lame d'essuyage. De manière générale, les plastifiants sont souvent des huiles. Ici, selon l'invention, le plastifiant est une huile bio-sourcée.

L'huile bio-sourcée est choisie de manière à ce que la différence entre le paramètre de solubilité de l'huile bio-sourcée mesuré en (cal/cm³)^{1/2} et le paramètre de solubilité du caoutchouc naturel est inférieure ou égale à 2 (cal/cm³)^{1/2}, voire inférieure ou égale à 1,5 (cal/cm³)^{1/2}, voire inférieure ou égale à 1 (cal/cm³)^{1/2}, voire inférieure ou égale à 0,5 (cal/cm³)^{1/2}.

Le paramètre de solubilité du caoutchouc naturel est de 8,3 (cal/cm³)^{1/2}.

Autrement dit, le paramètre de solubilité de l'huile bio-sourcée est proche du paramètre de solubilité du caoutchouc naturel. Cela assure que l'huile bio-sourcée (ou un mélange d'huiles bio-sourcées) choisie est compatible et a une bonne affinité avec le caoutchouc naturel, c'est à dire que l'huile va se mélanger correctement avec le caoutchouc naturel.

Ainsi, le paramètre de solubilité de l'huile bio-sourcée est compris entre 7 et 10 (cal/cm³)^{1/2}, de préférence compris entre 8 et 9 (cal/cm³)^{1/2}.

L'huile bio-sourcée est par exemple choisie parmi les huiles et/ou les graisses végétales mais aussi parmi les huiles et/ou les graisses animales, ou un mélange de celles-ci.

De façon avantageuse l'huile et/ou graisse végétale est choisie parmi l'huile de tournesol, l'huile d'olive, l'huile de colza, l'huile de lin, l'huile de noix de coco, l'huile de ricin, l'huile de soja. De préférence, il s'agit d'un mélange d'huile de tournesol et d'huile de colza.

L'huile et/ou graisse animale est choisie parmi les huiles de poisson.

Ces huiles bio-sourcées sont connues pour avoir un paramètre de solubilité compris entre 8,2 et 8,4 (cal/cm³)^{1/2}. A titre d'exemple, des paramètres de solubilité pour une sélection d'huiles sont donnés dans le tableau suivant :

| | |
|---|---|
| huile de tournesol | 8,2 (cal/cm³)^{1/2} |
| huile d'olive | 8,4 (cal/cm³)^{1/2} |
| huile de colza | 8,3 (cal/cm³)^{1/2} |
| huile de lin | 8,4 (cal/cm³)^{1/2} |
| huile de noix de coco | 8,4 (cal/cm³)^{1/2} |

Conformément à l'invention, l'utilisation de caoutchouc naturel non-fonctionnalisé comme seul caoutchouc de la lame d'essuyage, en combinaison avec une ou plusieurs huiles bio-sourcées qui présentent un paramètre de solubilité compris entre 8,2 et 8,4 (cal/cm³)^{1/2}, permet d'obtenir une lame d'essuyage écologique, simple à fabriquer, et dont les propriétés mécaniques et physiques sont très adaptées à l'essuyage d'une vitre de véhicule automobile.

De préférence, le matériau comprend en outre comme additif une charge de renfort bio-sourcée.

La charge de renfort permet d'améliorer les propriétés mécaniques du caoutchouc. Notamment elle permet d'améliorer la résistance à la rupture et/ou la performance d'abrasion de la lame 1 d'essuyage.

La charge de renfort bio-sourcée est par exemple choisie parmi une charge minérale, des fibres de bois, la cellulose, des diatomées, ou un mélange de ceux-ci. De préférence, il s'agit d'un mélange de charge minérale et de fibres de bois.

Ces types de charges de renfort permettent d'améliorer les propriétés mécaniques du caoutchouc naturel, tout en limitant l'utilisation du noir de carbone d'origine non bio-sourcée qui est classiquement utilisé comme charge de renfort des élastomères dans le domaine des véhicules automobiles.

La charge minérale est de préférence un silicate d'aluminium, tel qu'un kaolin. On entend par kaolin, une espèce minérale riche en silicates d'aluminium, en particulier en silicates d'aluminium hydratés tel que la kaolinite. Il peut aussi s'agir de kaolin calciné.

De façon avantageuse, le matériau comprend :
- entre 30 et 45 % en poids de caoutchouc naturel, de préférence entre 35 et 40 % en poids,
- entre 35 et 55% en poids de charge de renfort bio-sourcée, de préférence entre 40 et 50% en poids, et
- entre 1 et 10 % en poids de plastifiant bio-sourcé, de préférence entre 4 et 7 % en poids.

Le matériau peut aussi comprendre un ou plusieurs additifs qui sont généralement connus de l'homme du métier, notamment pour améliorer les propriétés mécaniques, l'élasticité, la résistance à l'usure, aux agressions extérieures ou encore améliorer la mise en œuvre du procédé.

Il peut s'agir d'un agent de vulcanisation, d'un agent de protection contre le rayonnement UV, l'oxydation, l'ozone et/ou l'usure par exemple. Les additifs sont d'origine bio-sourcée de manière que plus de 90% en poids du matériau soit d'origine bio-sourcée, de préférence plus de 95% en poids, voire plus de 96% en poids.

Autrement dit, moins de 10% en poids du matériau est d'origine non bio-sourcée, de préférence moins de 5% en poids, voire moins de 4% en poids.

De façon avantageuse, les produits « non bio-sourcés » sont des produits d'origine fossile, notamment issus de la pétrochimie.

Ainsi, le matériau comprend comme additif au moins un agent bio-sourcé de protection contre le rayonnement UV. Cet agent de protection est, par exemple, un oxyde de métal choisi parmi le dioxyde de titane, l'oxyde de zinc, ou un mélange de ceux-ci.

L'oxyde de métal peut être associé à un acide, tel que l'acide stéarique et/ou l'acide palmitique. L'acide en réagissant avec l'oxyde de métal forme un sel qui permet de solubiliser l'oxyde de métal dans le mélange.

Le matériau comprend en outre des additifs non bio-sourcés. Il peut s'agir d'au moins un agent non bio-sourcé anti-oxydant et/ou au moins un agent non bio-sourcé de vulcanisation.

L'agent anti-oxydant est choisi, par exemple, parmi les di-phényle amines, les paraphénylènediamines, ou un mélange de ceux-ci.

L'agent de vulcanisation est choisi, par exemple, parmi le thiurame, le thiazole, le sulfénamide, ou un mélange de ceux-ci. De préférence, il s'agit d'un mélange de thiurame, thiazole et sulfénamide. Tout autre agent anti-oxydant et/ou tout autre agent de vulcanisation connus de l'Homme du métier peuvent être envisagés.

Selon la figure 1, la lame 1 d'essuyage d'un balai d'essuie-glace conforme à l'invention présente une forme allongée et est destinée à être portée par un corps du balai (non représenté). La lame 1 comprend une lèvre 3 et un talon 5 qui sont reliés par une charnière 7. L'ensemble lèvre 3, talon 5, charnière 7 forme un corps de base de la lame 1.

Le talon 5 permet d'accrocher la lame 1 dans le corps du balai. La lèvre 3 est destinée à être au contact de la surface extérieure d'une vitre telle qu'un pare-brise en vue de son essuyage.

La charnière 7 est formée par une fine bande de matière qui confère à la lame une certaine flexibilité et autorise un basculement de celle-ci lors d'un changement de direction de déplacement du balai, autrement dit un mouvement de bascule d'avant en arrière de la lèvre.

La lame 1 est obtenue par un procédé de fabrication classique connu de l'Homme du métier.

De façon avantageuse, au moins une partie de la lame 1 comprend le matériau tel que décrit précédemment, notamment le corps de base de la lame comprend ce matériau. On peut ainsi envisager des modes de réalisations dans lesquels, par exemple :
- seule la lèvre 3 comprend le matériau,
- seul le talon 5 comprend le matériau,
- toute la lame 1 comprend le matériau.

Si nécessaire, tout ou partie de la surface de la lame 1 peut aussi être traitée de manière à modifier celle-ci, par exemple par graphitisation, traitement plasma, halogénation, implantation ionique et/ou dépôt d'un revêtement. Un tel traitement permet de renforcer les propriétés mécaniques, d'essuyage et/ou de résistance à l'usure de la lame.

La lame 1 d'essuyage peut ainsi comprendre un revêtement de type monocouche ou multicouche. Le revêtement recouvre le corps de base de la lame 1.

### EXEMPLE

Un exemple de formulation de matériau utilisé pour la fabrication d'une lame 1 d'essuyage conforme à l'invention est donné ici à titre illustratif, l'invention ne se limitant nullement à celui-ci. Les unités sont en pce (partie pour cent d'élastomère ou phr pour *parts per hundred of rubber* en anglais).

| **Formulation** | **pce** |
|---|---|
| Caoutchouc naturel | 100 |
| Kaolin | 120 |
| Fibre de bois | 5 |
| Huile de tournesol | 5 |
| Huile de colza vulcanisée au soufre minéral | 10 |
| Di-phényl amine | 3 |
| Paraphénylènediamine | 4 |
| Dioxide de titane | 10 |
| Acide palmitique et acide stéarique | 0.8 |
| Oxyde de zinc | 7.5 |
| Système de vulcanisation (thiurame/thiazole/sulfénamide) | 5.25 |

La cinétique de vulcanisation de cet exemple de matériau a été étudiée. Les mesures ont été réalisées selon la norme ISO 3417. Les résultats sont les suivants :

| **Propriétés de vulcanisation** | |
|---|---|
| S'mini | 2,8 dNm |
| S'maxi | 17 dNm |
| tₛ₂ | 1,5 min |
| t₉₀ | 2,7 min |
| **Vulcanisation** | 5 min à 165 °C |

La vulcanisation se fait en 5 minutes à 165 °C.

La viscosité Mooney de ce matériau a aussi été mesurée selon la norme ISO 289. Elle est de 54 unités Mooney. D'un point de vue de la mise en œuvre, le matériau est utilisable pour un procédé industriel par moulage ou par extrusion avec un procédé de mélange de temps de cycle court de l'ordre de 4 à 8 min.

Des essais ont par ailleurs été effectués pour tester les propriétés de ce matériau, notamment les propriétés mécaniques.

La dureté initiale du matériau est de 64 DIDC (degrés internationaux de dureté du caoutchouc). La mesure de dureté a été réalisée selon les normes ISO 48 et ISO 188.

Les mesures de résistance à la traction ou essai de traction (*tensile test* en anglais) ont été réalisées selon la norme ISO 37 à 500 mm/min. Les résultats sont résumés dans le tableau ci-dessous :

| **Propriétés initiales** | |
|---|---|
| Contrainte de traction à 100% ou Modulus 100% | 2,5 MPa |
| Résistance à la rupture | 10 MPa |
| Allongement à la rupture | 465% |

L'allongement du matériau soumis à une élongation de 50% après 22 heures à 70 °C (*50% elongation set* en anglais) est de 9%. Il a été mesuré selon la norme ISO 2285.

L'élasticité est de 67% et s'accompagne d'un effet d'hystérésis de 28%. L'élasticité a été mesurée selon la norme DIN53512 et l'effet d'hystérésis a été déterminé selon la norme NF-T 46002.

Ces propriétés sont du niveau de celles d'un mélange classique d'origine non bio-sourcée, notamment à base de noir de carbone comme charge de renfort, et de plastifiants non bio-sourcés.

Ainsi, dans cet exemple, la combinaison de deux charges de renfort bio-sourcées, le kaolin et la fibre de bois, en remplacement du noir de carbone classique, a été utilisée. Cette combinaison de charges de renfort a été associée à la combinaison de deux plastifiants bio-sourcés, l'huile de tournesol et l'huile de colza. Cette double combinaison a permis d'obtenir un matériau comprenant moins de 5% en poids d'additifs non bio-sourcés qui conserve les propriétés mécaniques nécessaires pour être utilisé dans la fabrication de lame d'essuyage.

Il est à noter que des variantes de réalisation sont bien sûr possibles et que la présente invention ne se limite pas seulement à des lames d'essuyage comprenant le matériau de formulation donnée en exemple.

## Revendications

1. Lame d'essuyage (1) pour balai d'essuie-glace, au moins une partie de ladite lame (1) comprenant un matériau à base de caoutchouc naturel et au moins un additif, **caractérisée en ce que** ledit additif est au moins un plastifiant bio-sourcé et **en ce que** ladite lame comprend comme seul caoutchouc ledit caoutchouc naturel à l'état vulcanisé, ledit caoutchouc vulcanisé étant obtenu par vulcanisation d'un caoutchouc naturel non-fonctionnalisé.

2. Lame d'essuyage (1) selon la revendication précédente, dans laquelle le plastifiant est une huile bio-sourcée.

3. Lame d'essuyage (1) selon la revendication précédente, dans laquelle la différence entre le paramètre de solubilité de ladite huile bio-sourcée et le paramètre de solubilité dudit caoutchouc naturel, mesurée en (cal/cm³)^{1/2} est inférieure ou égale à 2 (cal/cm³)^{1/2}.

4. Lame d'essuyage (1) selon la revendication précédente, dans laquelle le paramètre de solubilité de ladite huile bio-sourcée est compris entre 7 et 10 (cal/cm³)^{1/2}, de préférence compris entre 8 et 9 (cal/cm³)^{1/2}, et plus préférablement compris entre 8,2 et 8, 4 (cal/cm³)^{1/2}.

5. Lame d'essuyage (1) selon l'une quelconque des revendications précédentes, dans laquelle ladite huile bio-sourcée est choisie parmi les huiles et/ou graisses végétales, les huiles et/ou graisses animales, ou un mélange de celles-ci.

6. Lame d'essuyage (1) selon l'une quelconque des revendications précédentes, dans laquelle ledit additif est en outre une charge de renfort bio-sourcée.

7. Lame d'essuyage (1) selon la revendication précédente, dans laquelle ladite charge de renfort bio-sourcée est choisie parmi une charge minérale, des fibres de bois, la cellulose, des diatomées, ou un mélange de ceux-ci.

8. Lame d'essuyage (1) selon la revendication précédente, dans laquelle ladite charge minérale est un silicate d'aluminium.

9. Lame d'essuyage (1) selon l'une quelconque des revendications précédentes, dans laquelle plus de 90% en poids dudit matériau est d'origine bio-sourcée.

10. Lame d'essuyage (1) selon l'une quelconque des revendications précédentes, dans laquelle ladite partie de lame comprenant ledit matériau est un corps de base de ladite lame.

11. Lame d'essuyage (1) selon l'une quelconque des revendications précédentes, dans laquelle ledit additif est un agent bio-sourcé de protection contre le rayonnement UV.

12. Lame d'essuyage (1) selon l'une quelconque des revendications précédentes, dans laquelle ledit additif est un agent non bio-sourcé anti-oxydant et/ou un agent non bio-sourcé de vulcanisation.

13. Lame d'essuyage (1) selon l'une quelconque des revendications précédentes, ladite lame comprenant un seul grade de caoutchouc naturel.

14. Balai d'essuie-glace comprenant une lame d'essuyage (1) selon l'une quelconque des revendications précédentes.

15. Système d'essuyage comprenant un balai d'essuie-glace selon la revendication précédente.

## Patentansprüche

1. Wischlamelle (1) für ein Scheibenwischerblatt, wobei mindestens ein Teil der Lamelle (1) ein Material auf der Basis von natürlichem Kautschuk und mindestens einem Zusatzstoff enthält, **dadurch gekennzeichnet, dass** der Zusatzstoff mindestens ein biobasierter Weichmacher ist, und dass die Lamelle als einzigen Kautschuk den natürlichen Kautschuk im vulkanisierten Zustand enthält, wobei der vulkanisierte Kautschuk durch Vulkanisierung eines nicht-funktionalisierten natürlichen Kautschuks erhalten wird.

2. Wischlamelle (1) nach dem vorhergehenden Anspruch, wobei der Weichmacher ein biobasiertes Öl ist.

3. Wischlamelle (1) nach dem vorhergehenden Anspruch, wobei die Differenz zwischen dem Löslichkeitsparameter des biobasierten Öls und dem Löslichkeitsparameter des natürlichen Kautschuks, gemessen in (cal/cm³)^{1/2}, geringer als oder gleich 2 (cal/cm³)^{1/2} ist.

4. Wischlamelle (1) nach dem vorhergehenden Anspruch, wobei der Löslichkeitsparameter des biobasierten Öls zwischen 7 und 10 (cal/cm³)^{1/2}, vorzugsweise zwischen 8 und 9 (cal/cm³)^{1/2}, und bevorzugter zwischen 8,2 und 8, 4 (cal/cm³)^{1/2} liegt.

5. Wischlamelle (1) nach einem der vorhergehenden Ansprüche, wobei das biobasierte Öl ausgewählt wird unter den pflanzlichen Ölen und/oder Fetten, den tierischen Ölen und/oder Fetten oder einer Mischung von diesen.

6. Wischlamelle (1) nach einem der vorhergehenden Ansprüche, wobei der Zusatzstoff außerdem ein biobasierter Verstärkungsfüllstoff ist.

7. Wischlamelle (1) nach dem vorhergehenden Anspruch, wobei der biobasierte Verstärkungsfüllstoff ausgewählt wird unter einem mineralischen Füllstoff, Holzfasern, Cellulose, Kieselalgen oder einer Mischung davon.

8. Wischlamelle (1) nach dem vorhergehenden Anspruch, wobei der mineralische Füllstoff ein Aluminiumsilikat ist.

9. Wischlamelle (1) nach einem der vorhergehenden Ansprüche, wobei mehr als 90 Gew.-% des Materials biobasierten Ursprungs sind.

10. Wischlamelle (1) nach einem der vorhergehenden Ansprüche, wobei der das Material enthaltende Lamellenteil ein Basiskörper der Lamelle ist.

11. Wischlamelle (1) nach einem der vorhergehenden Ansprüche, wobei der Zusatzstoff ein biobasierter Schutzwirkstoff gegen UV-Strahlung ist.

12. Wischlamelle (1) nach einem der vorhergehenden Ansprüche, wobei der Zusatzstoff ein nicht biobasierter oxidationshemmender Wirkstoff und/oder ein nicht biobasierter Vulkanisierungswirkstoff ist.

13. Wischlamelle (1) nach einem der vorhergehenden Ansprüche, wobei die Lamelle einen einzigen Grad von natürlichem Kautschuk enthält.

14. Scheibenwischerblatt, das ein Wischlamelle (1) nach einem der vorhergehenden Ansprüche enthält.

15. Wischsystem, das ein Scheibenwischerblatt nach dem vorhergehenden Anspruch enthält.

## Claims

1. A wiper blade (1) for a windshield wiper, at least part of said blade (1) comprising a material based on natural rubber and at least one additive, **characterized in that** said additive is at least one biosourced plasticizer and **in that** said blade comprises, as the only rubber, said natural rubber in the vulcanized state, said vulcanized rubber being obtained by vulcanization of a nonfunctionalized natural rubber.

2. The wiper blade (1) as claimed in the preceding claim, in which the plasticizer is a biosourced oil.

3. The wiper blade (1) as claimed in the preceding claim, in which the difference between the solubility parameter of said biosourced oil and the solubility parameter of said natural rubber, measured in (cal/cm³)^{1/2}, is less than or equal to 2 (cal/cm³)^{1/2}.

4. The wiper blade (1) as claimed in the preceding claim, in which the solubility parameter of said biosourced oil is between 7 and 10 (cal/cm³)^{1/2}, preferably between 8 and 9 (cal/cm³)^{1/2}, and more preferably between 8.2 and 8.4 (cal/cm³)^{1/2}.

5. The wiper blade (1) as claimed in any one of the preceding claims, in which said biosourced oil is selected from vegetable oils and/or fats, animal oils and/or fats, or a mixture thereof.

6. The wiper blade (1) as claimed in any one of the preceding claims, in which said additive is moreover a biosourced reinforcing filler.

7. The wiper blade (1) as claimed in the preceding claim, in which said biosourced reinforcing filler is selected from a mineral filler, wood fibers, cellulose, diatoms, or a mixture thereof.

8. The wiper blade (1) as claimed in the preceding claim, in which said mineral filler is an aluminum silicate.

9. The wiper blade (1) as claimed in any one of the preceding claims, in which more than 90 wt% of said material is of biosourced origin.

10. The wiper blade (1) as claimed in any one of the preceding claims, in which said blade part comprising said material is a basic body of said blade.

11. The wiper blade (1) as claimed in any one of the preceding claims, in which said additive is a biosourced protective agent against UV radiation.

12. The wiper blade (1) as claimed in any one of the preceding claims, in which said additive is a nonbiosourced antioxidant and/or a nonbiosourced vulcanizing agent.

13. The wiper blade (1) as claimed in any one of the preceding claims, said blade comprising a single grade of natural rubber.

14. A windshield wiper comprising a wiper blade (1) as claimed in any one of the preceding claims.

15. A wiping system comprising a windshield wiper as claimed in the preceding claim.
